**Europäisches Patentamt**

**European Patent Office**

**Office européen des brevets**

(19)

(11) Numéro de publication : **0 356 307 B1**

(12)

# FASCICULE DE BREVET EUROPEEN

(45) Date de publication du fascicule du brevet :
**15.07.92 Bulletin 92/29**

(51) Int. Cl.$^5$ : **B23Q 35/26**

(21) Numéro de dépôt : **89402264.9**

(22) Date de dépôt : **10.08.89**

(54) **Dispositif de guidage d'un outil d'usinage de contour.**

(30) Priorité : **12.08.88 FR 8810881**

(43) Date de publication de la demande :
**28.02.90 Bulletin 90/09**

(45) Mention de la délivrance du brevet :
**15.07.92 Bulletin 92/29**

(84) Etats contractants désignés :
**CH DE GB IT LI SE**

(56) Documents cités :
**DE-A- 3 115 231**
**DE-A- 3 517 165**
**DE-B- 1 270 923**
**US-A- 3 245 321**

(73) Titulaire : **COMMISSARIAT A L'ENERGIE
ATOMIQUE Etablissement de Caractère
Scientifique Technique et Industriel
31/33, rue de la Fédération
F-75015 Paris (FR)**

(72) Inventeur : **Sgarbi, Frédéric
6 Bis, rue de l'Assomption
F-75016 Paris (FR)**

(74) Mandataire : **Mongrédien, André et al
c/o BREVATOME 25, rue de Ponthieu
F-75008 Paris (FR)**

EP 0 356 307 B1

## Description

La présente invention, se rapporte à un dispositif de guidage d'un outil d'usinage de contour afin notamment de régler sa direction d'avance ou de prévoir une phase d'ébavurage dans un processus automatique de contournage.

A l'heure actuelle, les dispositifs automatiques de réglage de direction d'avance utilisent des capteurs d'efforts disposés dans les broches des outils rotatifs.

La profondeur de passe souhaitée est associée à une valeur déterminée de l'effort sur laquelle la machine se recale sans cesse.

Toutefois, ces méthodes ne font que corriger des déviations au fur et à mesure qu'elles se produisent et ne permettent pas d'anticiper la suite de l'usinage, notamment lorsque des changements de la direction d'avance sont nécessaires ou qu'un ébavurage nécessite une profondeur de passe temporairement plus importante. Elles ne sont donc pas adaptées à de grandes vitesses d'avance et ne permettent pas d'usiner correctement par contournage des pièces de contour complexe.

L'invention a pour objet un dispositif de guidage d'un outil d'usinage qui n'ait pas ces inconvénients et permette en particulier d'effectuer le réglage souhaité à l'aide d'informations sur une partie du contour précédant la partie usinée à ce moment. Ce dispositif de guidage augmente nettement l'efficacité de l'usinage robotisé.

Le dispositif de guidage peut aussi être utilisé pour prévoir l'arrivée de l'outil sur une bavure et réduire alors sa vitesse d'avance pour un usinage correct, sans changer alors la direction d'avance.

Dans sa réalisation la plus générale, le dispositif de guidage comprend un aimant permanent tournant avec l'outil et produisant un champ tournant, ainsi qu'une lame fixée par une extrémité au logement et venant en contact par son autre extrémité avec le contour de la pièce, la lame étant flexible et élastique perpendiculairement à la direction d'avance, une bobine étant attachée à la lame de manière à être soumise à des déplacements transversaux devant l'aimant quand la lame fléchit, un courant induit par l'aimant circulant dans la bobine.

L'invention va maintenant être décrite plus précisément à l'aide des figures suivantes annexées à titre illustratif et non limitatif :
– la figure 1 est une vue globale de l'invention,
– la figure 2 illustre le fontionnement de l'invention, et
– les figures 3 et 4 indiquent deux emplois possibles de l'invention.

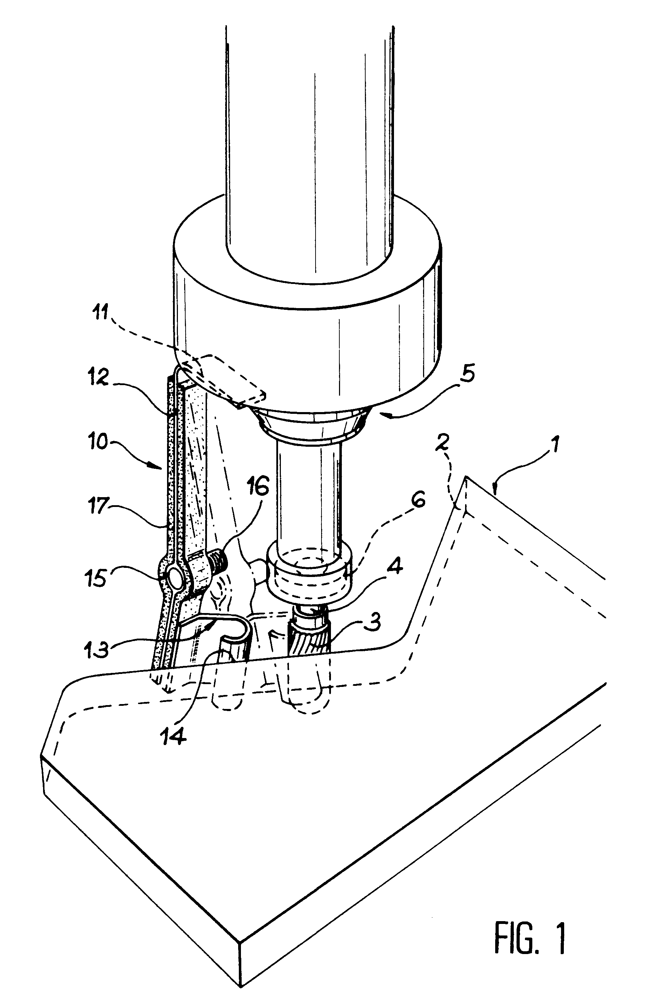

La figure 1 représente une pièce 1 plane dont une fraise 3 usine le contour 2 par un fraisage périphérique. La fraise 3 est suspendue à l'extrémité d'une broche 4 tournant à vitesse constante dans un logement 5 sous l'action d'un moteur synchrone. Un aimant permanent 6 est situé à l'intérieur du logement 5 et solidaire de la broche 4 ; il produit un champ magnétique tournant, perpendiculaire à l'axe de la broche 4.

Une lame flexible 10 comprend une première extrémité 11 fixée au logement 5, une partie médiane 12 parallèle à la broche 4 et une extrémité libre 13 qui se projette latéralement par rapport à la partie médiane 12 et qui est recourbée de manière qu'une génératrice 14 soit en contact avec le contour 2 quelles que soient les inflexions de celui-ci.

La partie médiane 12 se divise pour former une douille 15 à hauteur de l'aimant 6. La douille 15 contient une bobine d'induction 16 dont l'axe est orienté dans la direction d'avance de la fraise 3 ; l'aimant 6 y crée un courant induit dont un dispositif non représenté mesure la tension ou l'intensité.

Une double bande de caoutchouc 17 est installée le long de la partie médiane 12 afin d'amortir ses vibrations.

La lame 10 est en effet flexible et élastique et fléchit par contact de la génératrice 14 avec le contour 2 dans une direction correspondant à la profondeur de passe de la fraise 3. La bobine 16 est donc soumise à des mouvements de translation latérale devant l'aimant 6. Le courant induit par l'aimant 6 dans la bobine 16 est maximal quand l'axe de la bobine 16 passe par l'aimant 6 et diminue sans cesse quand cet axe s'éloigne de l'aimant 6 par suite de la flexion de la lame 10. Comme la rotation est régulière, le courant induit ne dépend que de la position de la bobine 16.

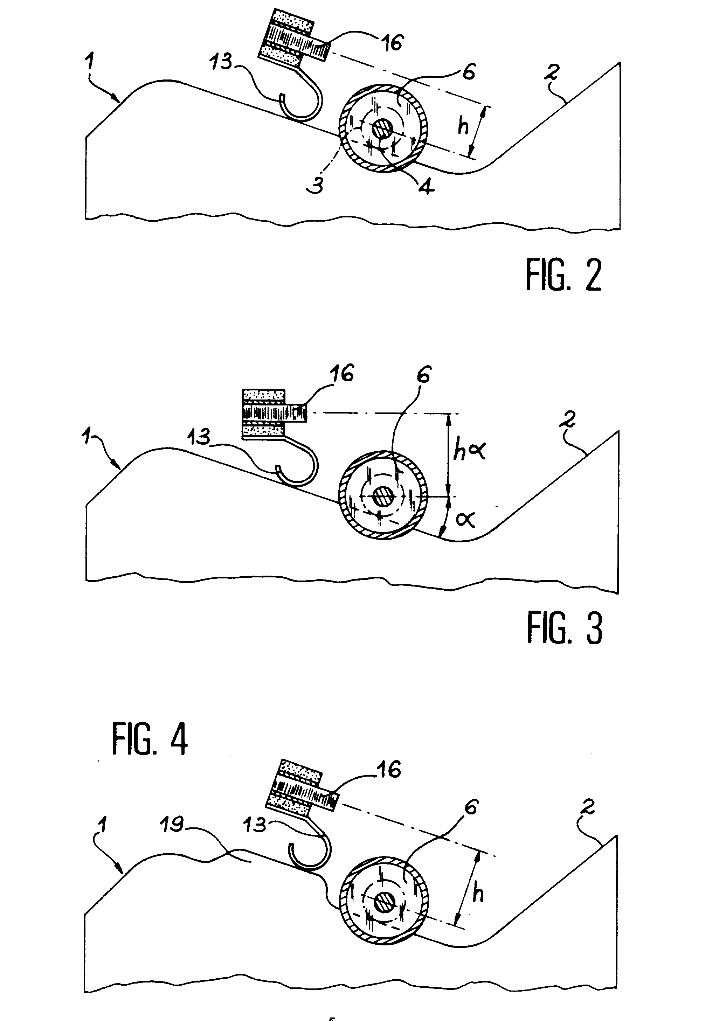

Le dispositif peut d'abord être utilisé pour rectifier la direction d'avance de la fraise 3 le long du contour 2. Quand la direction d'avance de la fraise 3 est parallèle au contour 2, ce qui est le cas figure 2, la distance h entre l'axe de la bobine 16 et l'aimant 6 reste constante et dépend uniquement du diamètre de la fraise 3 et de la profondeur de passe.

Si une déviation angulaire $\alpha$ s'introduit, la distance $h\alpha$ entre l'axe de la bobine 16 et l'aimant 6 qui résulte de cette déviation est modifiée (figure 3), ce qui permet de diagnostiquer la déviation alors même que la position de la fraise 3 par rapport au contour 2 n'a pas varié.

Le procédé utilisé avec le dispositif selon l'invention pour des usinages de contournage de la pièce 1 consiste donc à déterminer une valeur étalon de la tension aux bornes de la bobine 16, puis à modifier la direction d'avance dès que cette tension varie afin de retrouver cette tension.

La lame 10 peut précéder la fraise 3 dans son mouvement de contournage du contour 2 d'une distance suffisante pour que les changements de direction de contour de la pièce 1 puissent être pris en compte à temps par le système d'asservissement de la position de la fraise. Il est donc possible d'anticiper les variations du contour 2.

Un emploi différent du même dispositif, illustré figure 4, concerne l'ébavurage. La bavure vue de profil se présente sous la forme d'une saillie 19 sur le contour 2, ce qui signifie que la profondeur de passe de la fraise 3 doit augmenter sensiblement quand la bavure 19 est atteinte. Ici encore on profite de ce que la lame 10 atteint la bavure 19 bien avant la fraise 3 pour réduire la vitesse d'avance de cette dernière dès que l'accroissement de la flexion de la lame 10 est repéré. La vitesse d'avance normale est rétablie après que la lame 10 a suffisamment dépassé la bavure 19.

Dans cet emploi, le réglage continu de la direction d'avance doit être effectué par un autre dispositif.

Dans son premier emploi, les usinages obtenus sont de qualité bien meilleure ; dans le second, on peut adopter sans crainte des vitesses d'avance beaucoup plus importantes entre les bavures 19, ce qui est impossible avec des méthodes utilisant des capteurs d'effort dans les broches 4.

## Revendications

1. Dispositif de guidage d'un outil (3) d'usinage de contour (2) d'une pièce (1), l'outil étant suspendu à une broche (4) tournant dans un logement (5) mobile le long du contour (2) de la pièce selon une direction d'avance, caractérisé en ce qu'il comprend un aimant permanent (6) tournant avec l'outil et produisant un champ tournant, ainsi qu'une lame (10) fixée par une extrémité (11) au logement (5) et venant en contact par son autre extrémité (12) avec le contour (2) de la pièce, la lame étant flexible et élastique perpendiculairement à la direction d'avance, une bobine (16) étant attachée à la lame (10) de manière à être soumise à des déplacements transversaux devant l'aimant (6) quand la lame (10) fléchit, un courant induit par l'aimant (6) circulant dans la bobine.

2. Dispositif de guidage d'un outil d'usinage de contour (2) d'une pièce (1) suivant la revendication 1, caractérisé en ce que la lame (10) est revêtue d'un matériau amortisseur (17).

## Patentansprüche

1. Vorrichtung zum Führen eines Werkzeuges (3) zum Bearbeiten eines Umrisses (2) eines Werkstücks (1), wobei das Werkzeug an einer Welle (4) aufgehängt ist, die sich in einem Sitz (5) dreht, der entlang dem Umriß (2) des Werkstücks entlang einer Vorwärtsrichtung beweglich ist, dadurch gekennzeichnet, daß sie einen Permanentmagneten (6), der sich mit dem Werkzeug dreht und ein Drehfeld erzeugt, ebenso wie eine Lamelle (10) umfaßt, die mit einem Ende (11) an dem Sitz (5) befestigt ist und mit ihrem anderen Ende (12) mit dem Umriß (2) des Werkstücks in Berührung kommt, wobei die Lamelle senkrecht zur Vorwärtsrichtung flexibel und elastisch ist, wobei eine Spule (16) derart an der Lamelle (10) befestigt ist, daß sie transversalen Auslenkungen vor dem Magneten (6) unterworfen wird, wenn sich die Lamelle (10) biegt, wobei ein durch den Magneten (6) induzierter Strom in der Spule fließt.

2. Vorrichtung zum Führen eines Werkzeuges (3) zum Bearbeiten eines Umrisses (2) eines Werkstücks (1) nach Anspruch 1, dadurch gekennzeichnet, daß die Lamelle (10) mit einem dämpfenden Material überzogen ist.

## Claims

1. Device for guiding a tool (3) for machining a contour (2) of a part (1), the tool being hung from a spindle (4), rotating in a housing (5), which can be moved along the contour (2) of the part in a direction of advance, characterised in that it comprises a permanent magnet (6), rotating with the tool and producing a rotating field, and a strip (10) fixed by one end (11) to the housing (5) and coming into contact by its other end (12) with the contour (2) of the part, the strip being flexible and elastic perpendicularly to the direction of advance, a coil (16) being attached to the strip (10) in such a manner as to be subjected to transverse displacements in front of the magnet (6) when the strip (10) bends, a current induced by the magnet (6) circulating in the coil.

2. Device for guiding a tool for machining a contour (2) of a part (1) according to Claim 1, characterised in that the strip (10) is clad with a damping material (17).

11

12

10

17

15

13

16

5

2

1

6

4

3

14

FIG. 1

FIG. 2

FIG. 3

FIG. 4